# EUROPÄISCHE PATENTSCHRIFT

(11) **EP 0 680 044 B1**
(45) Veröffentlichungstag und Bekanntmachung des Hinweises auf die Patenterteilung: **12.09.2001**
(21) Anmeldenummer: 95106464.1
(22) Anmeldetag: 21.04.1995
(51) Int. Cl.: G11B 20/10, H04L 1/20, G01R 29/02

(54) **Verfahren zur Analyse und Entzerrung von Signalen**
Method for analysis and equalisation of signals
Procédé d'analyse et d'égalisation de signaux

(30) Priorität: 30.04.1994 DE 4415208
(43) Veröffentlichungstag der Anmeldung: 02.11.1995
(73) Patentinhaber: DEUTSCHE THOMSON-BRANDT GMBH, 78048 Villingen-Schwenningen (DE)
(72) Erfinder: Mager, Klaus, D-78073 Bad Dürrheim (DE)

(56) Entgegenhaltungen:
- CA-A- 2 056 679
- US-A- 3 868 576
- US-A- 4 381 546
- DATABASE IBM TECHNICAL DISCLOSURE IBM Corp NN70111499, ANONYMOUS: "Eye opening detector" XP002018269 & IBM TECHNICAL DISCLOSURE BULLETIN, Bd. 13, Nr. 6, November 1970, Seiten 1499-1500,
- PATENT ABSTRACTS OF JAPAN vol. 017, no. 264 (E-1370), 24.Mai 1993 & JP-A-05 007312 (HITACHI LTD), 14.Januar 1993,
- PATENT ABSTRACTS OF JAPAN vol. 013, no. 488 (P-954), 7.November 1989 & JP-A-01 195324 (YASKAWA ELECTRIC MFG CO LTD), 7.August 1989,

## Beschreibung

Die Erfindung betrifft ein Verfahren zur Entzerrung eines verzerrten Wiedergabesignales eines Aufzeichnungsgerätes und eine Schaltungsanordnung zur Entzerrung eines verzerrten Wiedergabesignales eines Aufzeichnungsgerätes.

Die Wiedergabesignale eines Videorecorders oder eines CD-Spielers sind in der Regel verzerrt. Zur Entzerrung sind sogenannte Entzerrer, häufig **auch** Equalizer genannt vorgesehen. Durch optimale Einstellung der Parameter des Entzerrers wird die Entzerrung optimiert.

Es ist bekannt, zum Abgleich eines Entzerrers das entzerrte Wiedergabesignal auf dem **Oszilloskop** als Augendiagramm darzustellen. Durch **triggern** auf die Amplitude werden die Datenbits mit ihren Flanken übereinander geschrieben, so daß eine Öffnung, das sogenannte Auge, entsteht. Bei korrekter Entzerrung des Datensignals ist das Auge weit geöffnet und scharf abgegrenzt. Bei ungenügender Höhenentzerrung schließt sich das Auge in vertikaler, bei mangelnder Farbenentzerrung in horizontaler Richtung. Der Phasenabgleich erfolgt nach dem Versuch- und Irrtum-Verfahren.

Für eine Signalverarbeitung im adaptiven Abgleich der Parameter des Entzerrers kann das Augendiagramm jedoch nicht genutzt werden, weil es sich bei den Daten um Zufallsfolgen mit unbekanntem Flankenzeitpunkt handelt.

Aus der US-A-4 381 546 ist ein System zur Messung von dem Verhalten eines Kommunikationskanals in einem Datenübertragungssystem bekannt geworden, bei dem Quadraturamplitudenmodulation (QAM) verwendet wird. Bei dem System werden die In-Phase- und Quadratur-Phase-Komponentensignale getrennt ausgewertet und die jeweils ermittelten Werte werden benutzt um einen Punkt im Phasenzustandsdiagramm darzustellen. Bei Verschlechterungen der Datenübertragung werden die sonst feststehenden Punkte verschmiert und es entsteht praktisch ein Augendiagramm mit dem auf die Qualität des Datenübertragungskanals rückgeschlossen werden kann.

Aus der CA-A-20 56 679 ist ebenfalls ein Gerät bekannt, mit dem die Signalqualität bei digitaler Datenübertragung und insbesondere die Kanalqualität überwacht werden kann. Auch bei diesem Gerät wird ein Augendiagramm zur Anzeige der Signalqualität verwendet. Das Augendiagramm wird in herkömmlicher Art und Weise auf einem Oszilloskop dargestellt.

Es ist daher Aufgabe der Erfindung, ein Verfahren zum automatischen Abgleich eines Entzerrers für ein verzerrtes Wiedergabesignal anzugeben.

Die Erfindung löst diese Aufgabe gemäß Anspruch 1 und Anspruch 7. Das zu analysierende und zu entzerrende Signal wird abgetastet und somit werden Abtastwerte erzeugt und jeweils 2 aufeinanderfolgende Abtastwerte in der Lissajous-Ebene erzeugen eine Lissajous-Figur.

Eine **Lissajous**-Figur **wird** gebildet, wenn in einem Koordinatensystem die Amplitude **zweier** phasenverschobener Schwingungen aufgetragen werden. Wenn z.B. auf der X-Achse eine Sinusschwingung und auf der Y-Achse eine Kosinusschwingung aufgetragen werden, so entsteht, wenn beide Schwingungen die gleiche Frequenz haben, ein Kreis. Ausschlaggebend für die Kreisfigur ist die Phasenverschiebung von 90° zwischen einer Sinus- und einer Kosinusschwingung.

Gemäß der Erfindung werden aber nicht zwei unterschiedliche Schwingungen einem **Lissajous**-Generator, zur Erzeugung von **Lissajous**-Figuren zugeführt. Vielmehr werden dem Generator zur Erzeugung **von Lissajous**-Figuren der aktuelle und der jeweils folgende Wert eines Signals zugeführt.

Die Erfindung geht von der Erkenntnis aus, daß bei einem vollkommen entzerrten Datensignal die Abtastwerte bezüglich der höchsten Signalfrequenz tatsächlich um 90° auseinander liegen. Deshalb wird als Lissajous-Figur ein Kreis gebildet, wenn das abgetastete Datensignal eine Sinusschwingung ist. Ist das abgetastete Datensignal einer Rechteckschwingung, so entsteht als Lissajous-Figur ein Quadrat.

Ist das Datensignal wie in der Praxis üblich jedoch verzerrt, so werden anstelle eines Kreises bzw. eines Quadrates mehr oder weniger unterschiedliche Ellipsen als Lissajous-Figuren abgebildet.

Die Erfindung geht von der weiteren Erkenntnis aus, daß durch Verändern der Parameter des Entzerrers die Entzerrung und somit natürlich auch die Figur der erzeugten Lissajous-Figur geändert wird. Gemäß der Erfindung werden nun die Parameter des Entzerrers so verändert, daß bei einer Sinusschwingung als Lissajous-Figur ein Kreis, bei einer Rechteckschwingung dagegen als Lissajous-Figur ein Quadrat gebildet wird.

Mit Hilfe eines Fuzzy-Regelkreises kann der Abgleich des Entzerrers gemäß der Erfindung automatisch durchgeführt werden.

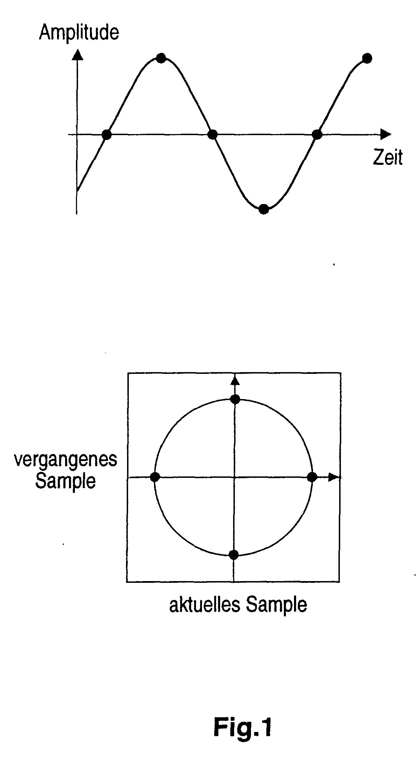

Es zeigen
- Fig. 1: eine Sinusschwingung und einen Kreis als zugehörige Lissajous-Figur,

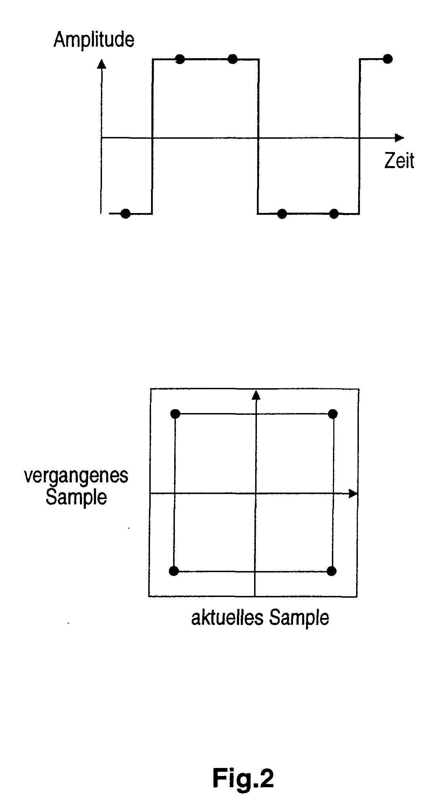

- Fig. 2: eine Rechteckschwingung und ein Quadrat als zugehörige Lissajous-Figur,

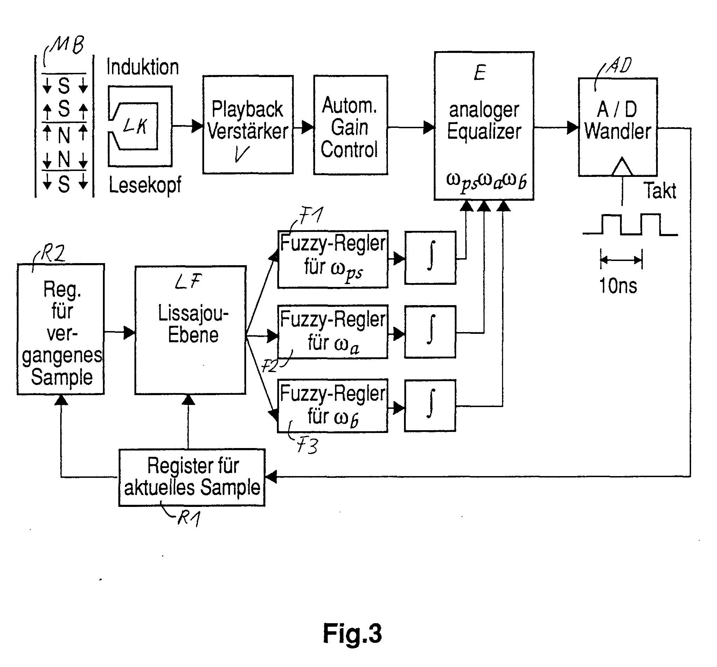

- Fig. 3: ein Ausführungsbeispiel der Erfindung,
- Fig. 4: ein verzerrtes Datensignal und die zugehörigen **Lissajous**-Figuren,

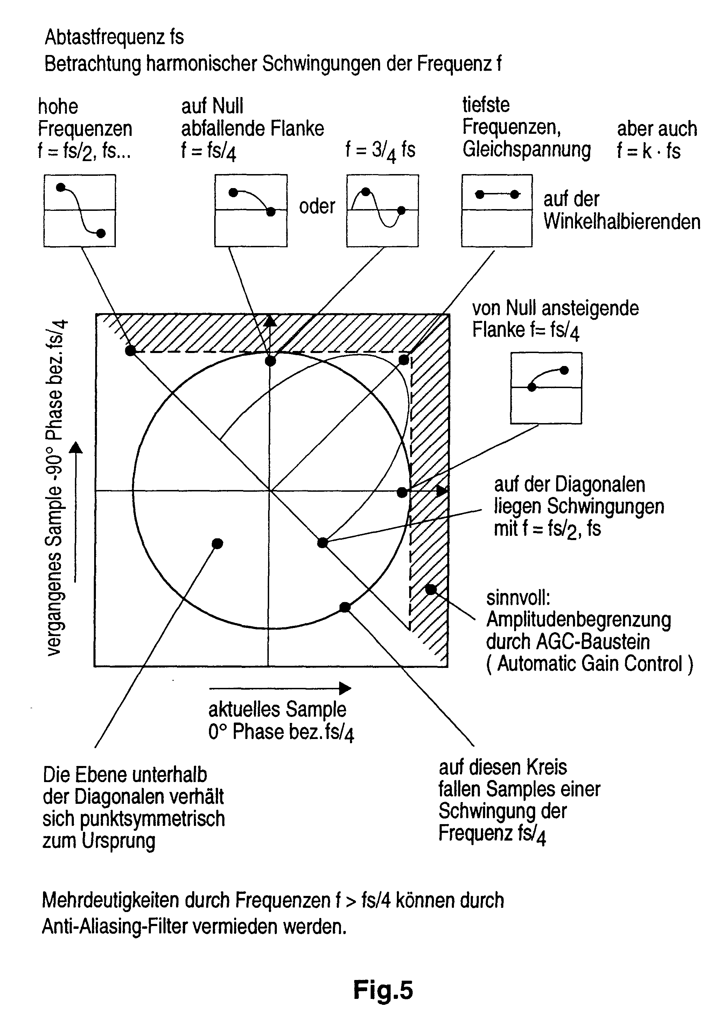

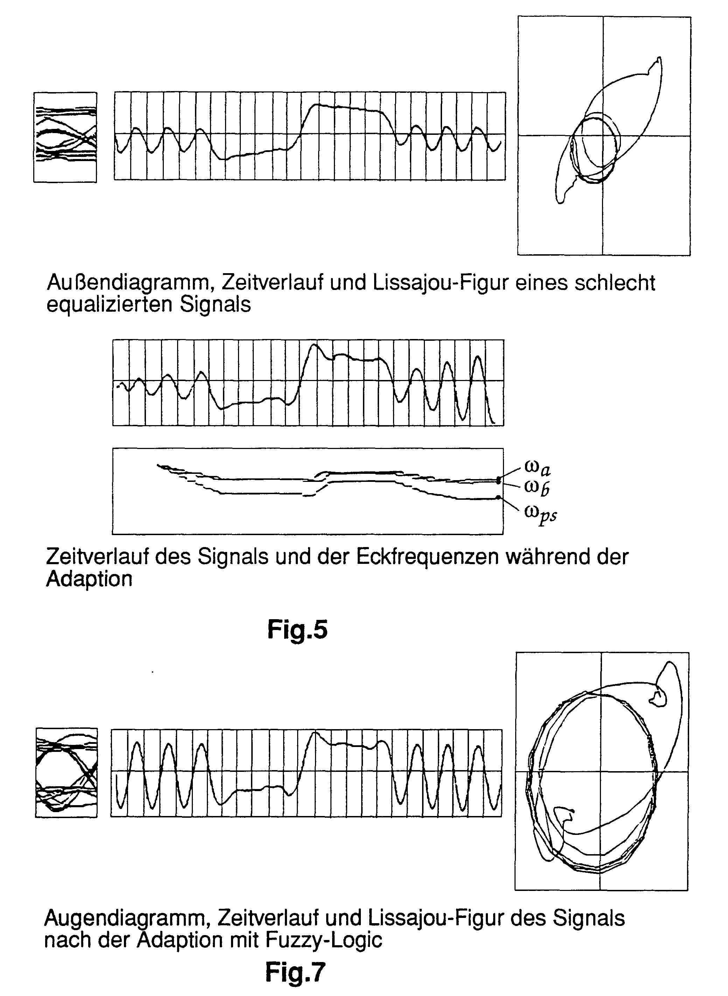

- **Fig. 5**: die Gebietszuordnung in der Lissajous-Ebene nach Frequenzbereichen,
- Fig. 6: das Augendiagramm, den Zeitverlauf und die Lissajous-Figur eines **mangelhaft** entzerrten Signals,
- Fig. 7: ein Augendiagramm, Zeitverlauf und Lissajous-Figur eines gemäß der Erfindung entzerrten Signals.

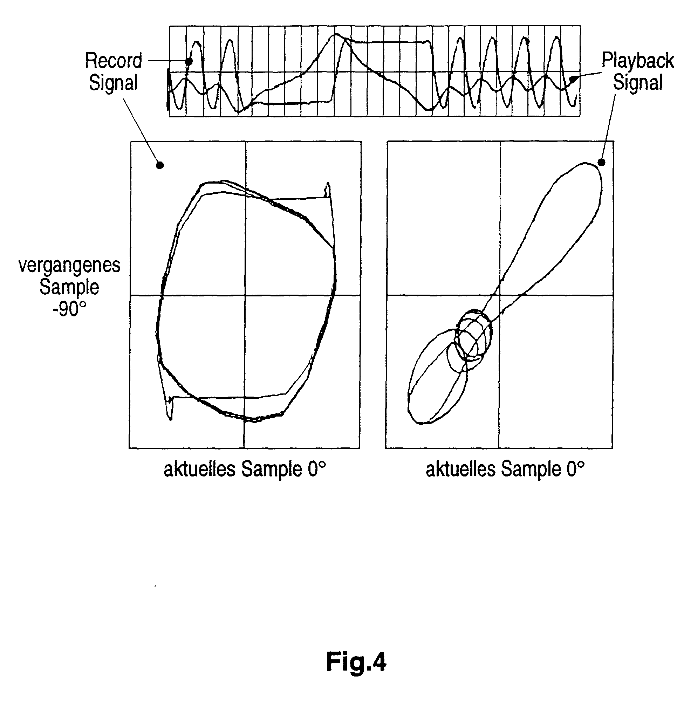

Anhand des in der Fig. 4 gezeigten Ausführungsbeispieles wird die Erfindung nun erläutert.

Die auf einem magnetischen Träger z. B. einem Magnetband MB aufgezeichneten Daten werden von einem Lesekopf LK gelesen. Das vom Lesekopf LK gelieferte Ausgangssignal wird in einem Verstärker V verstärkt und anschließend in einem Entzerrer E entzerrt. Das entzerrte Ausgangssignal des Entzerrers E wird über einen Analog-Digital-Wandler AD einem ersten Register R1 zugeführt, dessen Ausgangssignal sowohl einem zweiten Register R2 als auch einem Generator LF zur Erzeugung **von Lissajous**-Figuren zugeführt wird. Der Ausgang des Generators LF zur Erzeugung **von Lissajous**-Figuren ist mit dem Eingang eines ersten, eines zweiten und eines dritten Fuzzy-Reglers F1, F2 und F3 verbunden. Die Ausgänge der drei Fuzzy-Regler sind über je einen Integrator I mit den Parametereingängen des Entzerrers E verbunden.

Der Anlog-Digital-Wandler AD erzeugt die Abtastwerte des Datensignals. Im ersten Register R1 wird der jeweils aktuelle Abtastwert, im zweiten Register R2 der vorangegangene Abtastwert gespeichert. Der Generator LF zur Erzeugung **von Lissajous**-Figuren erzeugt daher aus zwei aufeinanderfolgenden Abtastwerten **einen Punkt einer** Lissajous-Figur. Die drei Fuzzy-Regler F1, F2 und F3 vergleichen nun die vom Generator LF das erzeugten **Lissajous**-Figuren mit einem Kreis bzw. mit einem Quadrat. Die von den Fuzzy-Reglern F1, F2 und F3 festgestellten Abweichungen von diesen Idealfiguren dienen dazu, die Parameter des Entzerrers zu verändern.

Für die Fuzzy-Regler F1, F2 und F3 ist folgende Regelstrategie vorgesehen.

Wenn die Abtastwerte mehr oder weniger in die Mitte der Lissajous-Ebene fallen, dann werden die Eckfrequenzen des Entzerrers nach unten korrigiert. Wenn die Abtastwerte die äußeren Eckpunkte berühren, wird die erste Eckfrequenz Omega Index ps des Entzerrers erhöht.

Wenn die von Null ansteigenden Flanken nicht genügend steil sind, wird die Zeit der Eckfrequenz Omega Index a des Entzerrers erniedrigt; wenn die Abtastwerte auf den Rand des Gebietes fallen, so wird dagegen die zweite Eckfrequenz Omega Index a erhöht.

Fallen die auf Null abfallenden Flanken zu flach ab, so wird die dritte Eckfrequenz Omega Index b erniedrigt, während die dritte Eckfrequenz Omega **Index** b erhöht wird, wenn die Abtastwerte auf den Rand des Gebietes fallen.

Liegen die Abtastwerte auf einem Kreis bei einer Sinusschwingung bzw. auf einem Quadrat bei einer Rechteckschwingung, so werden die Eckfrequenzen des Entzerrers nicht verändert.

Bricht die Amplitude bei andauerndem gleichen Binärwert ein, werden die Eckfrequenzen ebenfalls nicht verändert.

Die erste Eckfrequenz Omega Index ps ist die sogenannte **Pulsslimmer**-Frequenz.

Das erfindungsgemäße Verfahren zur Entzerrung eines verzerrten Wiedergabesignales eines Aufzeichnungsgerätes bietet den Vorteil, daß durch die spezielle Art der Erzeugung einer Lissajous-Figur und entsprechende Auswertung die Entzerrung des Signals automatisch durchgeführt werden kann.

## Patentansprüche

1. Verfahren zur Entzerrung eines verzerrten Wiedergabesignales (S) eines Aufzeichnungsgerätes, **dadurch gekennzeichnet, daß** das zu entzerrende Signal (S) einem Entzerrer (E) zugeführt wird, dessen Ausgangssignal in einem A/D-Wandler (AD) abgetastet wird, wobei die aufeinanderfolgenden Abtastwerte bezüglich der höchsten vorkommenden Signalfrequenz um 90° auseinander liegen, wobei jeweils zwei aufeinanderfolgende Abtastwerte genommen werden, um einen Punkt in einer Lissajous-Ebene darzustellen, wobei die X-Koordinate des Punktes in der Lissajous-Ebene durch den letzten der beiden aufeinanderfolgenden Abtastwerte bestimmt wird und die Y-Koordinate des Punktes in der Lissajous-Ebene durch den ersten der beiden aufeinanderfolgenden Abtastwerte bestimmt wird, wobei die entstehende Lissajous-Figur ausgewertet wird und die Parameter des Entzerrers (E) so verändert werden, daß entweder eine kreisförmige Lissajous-Figur entsteht, gültig für ein sinusförmiges Aufzeichnungssignal oder eine quadratförmige Lissajous-Figur entsteht, gültig für ein rechteckförmiges Aufzeichnungssignal.

2. Verfahren nach Anspruch 1, wobei die Eckfrequenzen des Entzerrers (E) nach unten korrigiert werden, wenn die Abtastwerte etwa in die Mitte der Lissajous-Ebene fallen.

3. Verfahren nach Anspruch 1 oder 2, wobei die erste Eckfrequenz Omega Index ps erhöht wird, wenn die Eckpunkte des Quadrates bzw. des Kreises berührt werden.

4. Verfahren nach einem der Ansprüche 1 bis 3, wobei eine zweite Eckfrequenz Omega Index a erniedrigt wird, wenn die von Null ansteigenden Flanken nicht steil ausfallen, und die zweite Eckfrequenz Omega Index a erhöht wird, wenn die Abtastwerte in die Randgebiete fallen.

5. Verfahren nach einem der Ansprüche 1 bis 4, wobei eine dritte Eckfrequenz Omega Index b erniedrigt wird, wenn die auf Null abfallenden Flanken nicht genügend steil ausfallen und daß die dritte Eckfrequenz Omega Index b erhöht wird, wenn die Abtastwerte auf den Rand des Gebietes fallen.

6. Verfahren nach einem der Ansprüche 1 bis 5, wobei die Eckfrequenzen nicht verändert werden, wenn die Abtastwerte auf einem Kreis oder einem Quadrat liegen.

7. Schaltungsanordnung zur Entzerrung eines verzerrten Wiedergabesignales eine Aufzeichnungsgerätes, **dadurch gekennzeichnet, daß** das zu entzerrende Signal (S) dem Eingang eines Entzerrers (E) zugeführt wird, dessen Ausgang mit dem Eingang eines A/D-Wandlers (AD) verbunden ist, daß der Ausgang des A/D-Wandlers (AD) mit dem Eingang eines ersten Registers (R1) mit dem aktuellen Abtastwert verbunden ist, das der Ausgang des ersten Registers (R1) mit dem ersten Eingang eines Generators (LF) zur Erzeugung von Lissajous-Figuren und mit dem Eingang eines zweiten Registers (R2) zur Speicherung des vorangehenden Abtastwertes verbunden ist, daß der Ausgang des zweiten Registers (R2) mit dem zweiten Eingang des Generators (LF) zur Erzeugung von Lissajous-Figuren verbunden ist, dessen Ausgänge mit den Eingängen mehrerer Fuzzy-Regler (F1, F3, F3) verbunden sind und daß die Ausgänge der Fuzzy-Regler (F1, F2, F3) über je einen Integrator (I) mit den Parametereingängen des Entzerrers (E) verbunden sind.

## Claims

1. Method for equalizing a distorted play back signal (S) of a recording device, **characterized in that** the signal (S) to be equalized is fed to an equalizer (E), the output signal of which is sampled in a A/D-converter (AD), wherein the successive samples differ from each other by 90° in relation to the maximum possible signal frequency, wherein in each case two successive samples are taken in order to display a point in a Lissajousplane, wherein the x-coordinate of a point in said Lissajous plane is determined by means of the last one of said two successive samples and the y-coordinate of a point in the Lissajous plane is determined by means of the first one of said two successive samples, wherein said resulting Lissajous figure is evaluated and the parameters of said equalizer (E) are modified in such a manner that either a Lissajous figure in form of a circle is resulting, valid for a sinusoidal record signal or a Lissajous figure in form of a square is resulting, valid for a record signal having a rectangular shape.

2. Method according to Claim 1, wherein the cut-off frequencies of the equalizer (E) are corrected downward when the samples fall approximately in the centre of the Lissajous plane.

3. Method according to Claim 1 or 2, wherein the first cut-off frequency (ωₚₛ₎ is increased when the corner points of the square or, respectively, of the circle are touched.

4. Method according to one of Claims 1 to 3, wherein a second cut-off frequency (ωₐ₎ is lowered when the edges rising from zero are not steep, in that the second cut-off frequency (ωₐ₎ is increased when the samples fall in the edge regions.

5. Method according to one of Claims 1 to 4, wherein that a third cut-off frequency (ω_{b)} is lowered when the edges falling to zero do not fall at a sufficiently shallow angle, in that the third cut-off frequency (ω_{b)} is increased when the samples fall on the edge of the region.

6. Method according to one of Claims 1 to 5, wherein the cut-off frequencies are not changed when the samples are on a circle or a square.

7. Circuit arrangement for equalizing a distorted signal play back signal, **characterized in that** the signal (S) to be equalized is supplied to the input of an equalizer (E), the output of which is connected to the input of an analogue/digital converter (AD), in that the output of the analogue/digital converter (AD) is connected to the input of a first register (R1) for the current sample, in that the output of the first register (R1) is connected to the first input of a generator (LF) for generating Lissajous figures and to the input of a second register (R2) for storing the preceding sample, in that the output of the second register (R2) is connected to the second input of the generator (LF) for Lissajous figures, the outputs of which are connected to the inputs of a number of fuzzy logic controllers (F1, F2, F3), and that the outputs of the fuzzy logic controllers (F1, F2, F3) are connected via one integrator (I) each to the parameter inputs of the equalizer (E).

## Revendications

1. Procédé d'égalisation d'un signal de reproduction (S) déformé d'un appareil d'enregistrement, **caractérisé en ce que** le signal à égaliser (S) est acheminé à un égaliseur (E) dont le signal de sortie est balayé dans un convertisseur analogique-numérique (AD), où les valeurs de balayage successives relatives à la fréquence de signal la plus élevée sont séparées de 90°, où deux valeurs de balayage successives sont prises pour représenter un point dans un plan Lissajous, où la coordonnée X du point du plan Lissajous est déterminée par la demière des deux valeurs de balayage successives et la coordonnée Y du point du plan Lissajous est déterminé par la première des deux valeurs de balayage successives, où la courbe de Lissajous créée est évaluée et les paramètres de l'égaliseur (E) sont modifiés de sorte qu'une courbe de Lissajous en forme de cercle est créée, valable pour un signal d'enregistrement sinusoïdal, ou une courbe de Lissajous en forme de carré est créée, valable pour un signal d'enregistrement rectangulaire.

2. Procédé conforme à la revendication 1, où les fréquences de coupure de l'égaliseur (E) sont rectifiées vers le bas si les valeurs de balayage sont situées plus ou moins au centre du plan Lissajous.

3. Procédé conforme à la revendication 1 ou 2, où la première fréquence de coupure Omega Index ps est augmentée si les sommets du carré ou du cercle sont touchés.

4. Procédé conforme à l'une des revendications 1 à 3, où une deuxième fréquence de coupure Omega Index a est abaissée si les flancs croissant depuis zéro ne sont pas raides, et la deuxième fréquence de coupure Omega Index a est augmentée si les valeurs de balayage tombent à la limite de la zone.

5. Procédé conforme à l'une des revendications 1 à 4, où une troisième fréquence de coupure Omega Index b est abaissée si les flancs descendant à zéro ne sont pas suffisamment raides, et la troisième fréquence de coupure Omega Index b est abaissée si les valeurs de balayage tombent à la limite de la zone.

6. Procédé conforme à l'une des revendications 1 à 5, où les fréquences de coupure ne sont pas modifiées si les valeurs de balayage sont situées sur un cercle ou un carré.

7. Aménagement de circuit pour l'égalisation d'un signal de reproduction déformé d'un appareil d'enregistrement, **caractérisé en ce que** le signal à égaliser (S) est acheminé à l'entrée d'un égaliseur (E) dont la sortie est reliée à l'entrée d'un convertisseur analogique-numérique (AD), **en ce que** la sortie du convertisseur analogique-numérique (AD) est reliée à l'entrée d'un premier registre (R1) pour la valeur actuelle, **en ce que** la sortie du premier registre (R1) est reliée à la première entrée d'un générateur (LF) pour produire les courbes de Lissajous et à l'entrée d'un second registre (R2) pour stocker la valeur de balayage précédente, **en ce que** la sortie du second registre (R2) est reliée à la deuxième entrée du générateur (LF) pour produire les courbes de Lissajous, générateur dont les sorties sont reliées aux entrées de plusieurs circuits de réglage de flou (F1, F2, F3) **et en ce que** les sorties des circuits de réglage de flou (F1, F2, F3) sont chacune reliées, via un intégrateur (I) aux entrées de paramètres de l'égaliseur.
